# EUROPÄISCHE PATENTSCHRIFT

(11) **EP 1 062 630 B1**
(45) Veröffentlichungstag und Bekanntmachung des Hinweises auf die Patenterteilung: **28.05.2003**
(21) Anmeldenummer: 99914520.4
(22) Anmeldetag: 12.03.1999
(51) Int. Cl.: G06F 9/44, G06F 9/445, G07F 7/10

(54) **DATENTRÄGER**
DATA CARRIER
SUPPORT DE DONNEES

(30) Priorität: 12.03.1998 DE 19810675
(43) Veröffentlichungstag der Anmeldung: 27.12.2000
(73) Patentinhaber: Giesecke & Devrient GmbH, 81677 München (DE)
(72) Erfinder: FREY, Thomas, D-85560 Ebersberg (DE); MERCK, Martin, D-81677 München (DE)
(74) Vertreter: Klunker . Schmitt-Nilson . Hirsch
(86) Internationale Anmeldenummer: EP9901636
(87) Internationale Veröffentlichungsnummer: WO99046726

(56) Entgegenhaltungen:
- EP-A- 0 733 970
- EP-A- 0 810 522
- US-A- 4 787 034
- US-A- 5 291 601
- US-A- 5 615 400
- "TABLE-DRIVEN EMULATION PROCESS FOR MULTI-STATE MACHINES" IBM TECHNICAL DISCLOSURE BULLETIN, Bd. 28, Nr. 4, 1. September 1985 (1985-09-01), Seiten 1673-1675, XP000023102 ISSN: 0018-8689

## Beschreibung

Die Erfindung geht aus von einer Einrichtung nach der Gattung der Ansprüche 1 bzw. 9. Ein bekannter Datenträger dieser Art sind Chipkarten, die in einer zunehmenden Zahl von Anwendungen eingesetzt werden. Getrieben wird diese Entwicklung durch die immer größer werdende Leistungsfähigkeit der in den Chips realisierbaren Prozessorsysteme. Konnten bisherige Chipkarten nur durch den Kartenhersteller vordefinierte Funktionen ausführen, so erlaubt die nunmehr mögliche Chiparchitektur grundsätzlich die nachträgliche Implementierung von Funktionalitäten durch einen Anwender. Das Zulassen solcher Anwenderimplementierungen birgt allerdings das Risiko einer Herabsetzung der Funktionssicherheit einer Chipkarte, wenn die Funktionsimplementierung mittels lauffähiger Programme erfolgt, welche das Betriebssystem der Karte unmittelbar ausführen kann. Solche lauffähigen Programme greifen direkt auf Kartengrundfunktionen zu und erlauben deren Manipulation bzw. Störung. Zur Überwindung dieser Schwierigkeit bietet sich die Verwendung von Betriebskonzepten an, bei denen Interaktionsdateien abgespeichert werden, die von einer Interpretereinheit in ausführbare Anweisungen umgesetzt werden. Ein gegenwärtig besonders aktuelles Konzept dieser Art ist unter dem Markennamen JAVA bekannt und in den Veröffentlichungen der Reihe "The JAVA Series", Verlag Addision/Wessley, spezifiziert. JAVA beinhaltet eine objektorientierte Programmiersprache sowie eine als virtuelle Maschine bezeichnete, in Software realisierte Prozessoreinheit. Die virtuelle Maschine ist Bestandteil der Prozessoreinheit, für die ein Anwendungsprogramm bestimmt ist. Das Programm liegt in einem Klassendateiformat vor, in welches das zugrundeliegende JAVA-Programm durch Kompilierung überführt wurde. Bei der Abarbeitung eines Programmes führt die virtuelle Maschine zahlreiche Sicherheitsprüfungen durch. Desweitereren kontrolliert sie den Eingriff von Programmanweisungen in die Grundfunktionen des Prozessorsystems. Auf diese Weise läßt sich gewährleisten, daß Anwendungsprogramme die Betriebssicherheit der Prozessoreinheit nicht beeinträchtigen.

Vorgeschlagen wurde auch bereits, das JAVA-Konzept für Chipkarten einzusetzen. Der Verwendung in Chipkarten steht allerdings der vergleichsweise große Speicherplatzbedarf für die Interaktionsprogramme und die virtuelle Maschine sowie die durch die Objektorientierung bedingte langsame Abarbeitung der Programme beschränkend entgegen.

Der Erfindung liegt die Aufgabe zugrunde, einen zur Implementierung von Anwendungsprogrammen durch einen Anwender geeigneten Datenträger anzugeben, der bei gleicher Betriebssicherheit wie das JAVA-Konzept mit kleineren Programmen auskommt und diese schneller abarbeitet.

Die Aufgabe wird gelöst durch einen Datenträger mit den Merkmalen der Ansprüche 1 bzw. 9. Ein erfindungsgemäßer Datenträger hat den Vorteil, daß von einem Anwender erzeugte Interaktionskontexte weniger Speicherplatz benötigen als übliche auf Klassendateien beruhende Programme, wie sie insbesondere für virtuelle JAVA Maschinen vorgesehen sind. Aufgrund ihrer ausgeprägten Strukturierung kann die Interpretereinheit sie deutlich schneller abarbeiten. Erreicht werden diese Vorteile durch Einführung eines auf Nummern beruhenden Referenzierungssystems, das an Stelle der sonst üblichen textuellen Referenzierung tritt. Grundlage hierfür bildet die Erkenntnis, daß der durch Nummern kennzeichenbare Referenzierungsraum für viele Zwecke, insbesondere solche in Verbindung mit Chipkartenanwendungen ausreicht Einen grundsätzlichen Neuaufbau einer Interpretereinheit erfordert ein erfindungsgemäßer Datenträger nicht. Vorteilhaft erlaubt die erfindungsgemäße Interaktionsdateienstruktur vielmehr ohne Einschränkung die Übernahme aller von JAVA bekannten Sicherheitsprüfungen, so daß die Betriebssicherheit des Datenträgers bezüglich seiner Grundfunktionen absolut gewährleistet bleibt.

Eine besonders vorteilhafte Weiterbildung des vorgeschlagenen Datenträgers sieht vor, die Pakete systematisch mit einer vereinfachten Kennzeichnung in Form einer Kurzidentifikationsnummer zu versehen, die Kennzeichnungssystematik in einer Tabelle festzuhalten und sie innerhalb eines Paketes zur Referenzierung der Gesamtheit der Pakete zu verwenden.

Sehr vorteilhaft werden Nummernbezeichnungen weiterhin auch für die in einem Paket vorkommenden Methoden und Attribute eingesetzt.

Ein Ausführungsbeispiel der Erfindung wird nachfolgend unter Bezugnahme auf die Zeichnung näher erläutert.

Es zeigen
Fig. 1 einen Datenträger,
Fig. 2 ein Schema einer Klassendatei,
Fig. 3 die Struktur einer Interaktionsdatei,
Fig.4 die Struktur des Bibliotheksabschnittes einer Klassendatei gemäß dem Stand der Technik,
Fig. 5 die Struktur eines Bibliotheksabschnittes gemäß der Erfindung,
Fig. 6 die Abarbeitung der aus dem Quellprogramm resultierenden Klassendatei durch eine Interpretereinheit gemäß dem Stand der Technik,
Fig. 7 dieselbe Abarbeitung gemäß der Erfindung,

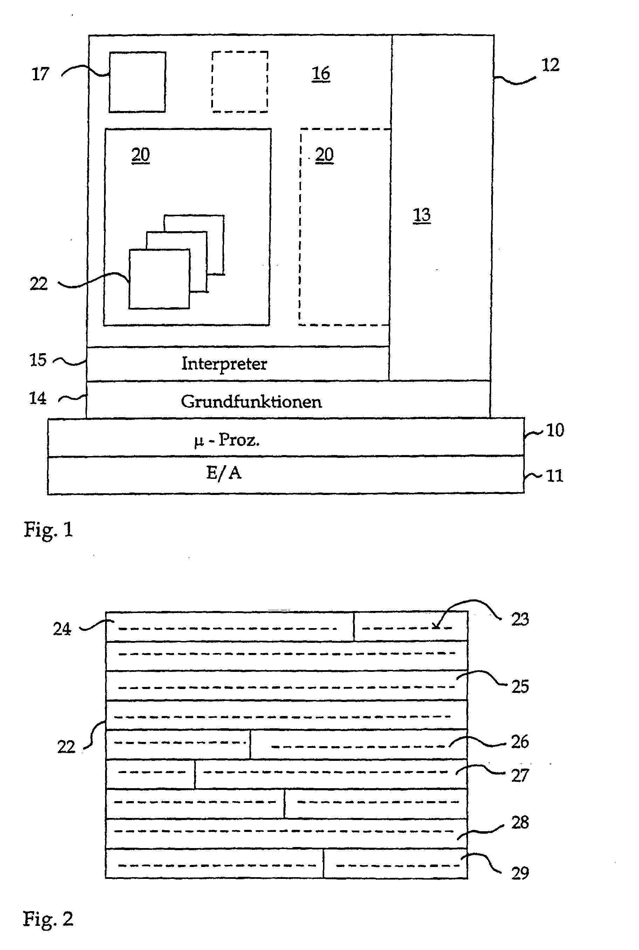

Fig. 1 zeigt die typische Struktur eines Datenträgers. Seine Hauptbestandteile sind ein Mikroprozessor 10 zur Verarbeitung und Verwaltung aller im Datenträger gehandhabten Signale, eine Ein/Ausgabeschnittstelle 11 zum Austausch von Signalen mit einem externen Gerät sowie ein Speicher 12, worin die zum Betrieb des Datenträgers benötigten Programme sowie die zu bearbeitenden und/oder zu verwaltenden Daten abgelegt werden. Der Speicher 12 gliedert sich entsprechend formal in mehrere Bereiche. Ein erster enthält das Betriebssystem 13 zur Steuerung des Betriebes des Mikroprozessors 10. Ein zweiter Bereich 14 enthält im Datenträger fest angelegte Grundfunktionen. Dazu zählt beispielsweise die Prüfung einer PIN-Nummer, falls sich der Datenträger etwa auf einer personenbezogenen Chipkarte befindet. In einem weiteren Speicherbereich 15 befindet sich ein Ausführungsprogramm, welches die Interpretereinheit bildet. Der die Interpretereinheit beinhaltende Speicherbereich 15 ist zweckmäßig nicht durch Anwender änderbar. Vorgesehen sein kann auch, die Interpretereinheit 15 in Hardwareform auszuführen. Ein weiterer Speicherbereich 16 dient zur Aufnahme von Applikationsprogrammen, die von dem Anwender in den Datenträger gebracht werden können, um ihn mit weiteren Funktionalitäten auszustatten.

Die Applikationsprogramme werden durch die Interpretereinheit 15 referenzorientiert abgearbeitet Sie ergeben sich durch Kompilierung von zugrundeliegenden, vorzugsweise in einer objektorientierten Programmiersprache erstellten Anwendungsquellprogrammen. Einem Grundkonzept der objektorientierten Programmierung folgend sind die Applikationspakete in Klassendateien 22 strukturiert. Jeweils mehrere Klassendateien 22 können zu einem, nachfolgend Paket genannten, Applikationspaket 20 zusammengefaßt sein. Alle Referenzen innerhalb eines Paketes 20 erfolgen textuell, Adressen werden nicht verwendet. Den Paketen 20 sind Interaktionskontexte 17 zugeordnet, die beim Laden bzw. Installieren der Programme in den Speicher 12 angelegt werden.

Der vorgeschlagene Datenträger ist-für Anwendungen mit beschränkten Hardwareresourcen konzipiert, insbesondere für Chipkarten. Hier eignet er sich gleichermaßen für kontaktlose wie kontaktbehaftete Ausführungen. In ersterem Fall ist die Ein/Ausgabeschnittstelle 11 z.B. als Spule ausgebildet, im zweiten als Kontaktflächengruppe.

Für diese Beschreibung wird davon ausgegangen, daß die den Applikationsprogrammen zugrundeliegenden Quellprogramme in JAVA verfaßt wurden, und daß die daraus nach Kompilierung hervorgehenden Applikationspakete den semantischen Anforderungen zur Ausführbarkeit durch eine JAVA-fähige virtuelle Maschine genügen. Soweit sie nicht durch die in der nachfolgenden Beschreibung genannten Maßnahmen festgelegt ist, entspricht die Interpretereinheit 15 der Spezifikation für eine JAVA VIRTUAL MACHINE. Der Bezug auf das JAVA Konzept wurde dabei gewählt, weil es das aktuellste objektorientierte Interpreterprogrammsystem darstellt. Die nachfolgend beschriebenen Maßnahmen sind aber nicht auf JAVA beschränkt, sondern lassen sich grundsätzlich auch auf verwandte, auf denselben Grundprinzipien beruhende Systeme übertragen

Fig. 2 zeigt schematisch die Struktur einer Klassendatei 22, welche die Grundstruktur eines Paketes 20 bildet. Entsprechend der zugrundegelegten Semantik des Programmiersprachenkonzeptes besteht sie aus einer Folge von 8-Bit Bytes, welche durch waagerechte Striche 23 angedeutet sind. Die Bytefolge ist in aneinandergereihten Tabellen organisiert und enthält alle zur Interpretation der Klassendatei 22 notwendigen Informationen und Referenzen. Im wesentlichen läßt sich jede Klassendatei 22 in sechs Hauptabschnitte gliedern: Den Führungsabschnitt 24, welcher Informationen zu der Klassendatei als Ganzes enthält, einen Bibliotheksabschnitt 25, in welchen innerhalb der Klassendatei benötigte unveränderliche Informationen eingetragen sind, insbesondere verwendete Referenzen, einen Schnittstellenabschnitt 26 mit einer Liste der in der Klassendatei enthaltenen Schnittstellen, einen Felderabschnitt 27 mit einer Liste der durch die Klasse definierten Datenfelder, einen Methodenabschnitt 28 mit durch die Klasse definierten Funktionen sowie einen Attributeabschnitt 29 mit Zusatzinformationen insbesondere zu den Feldern und Methoden.

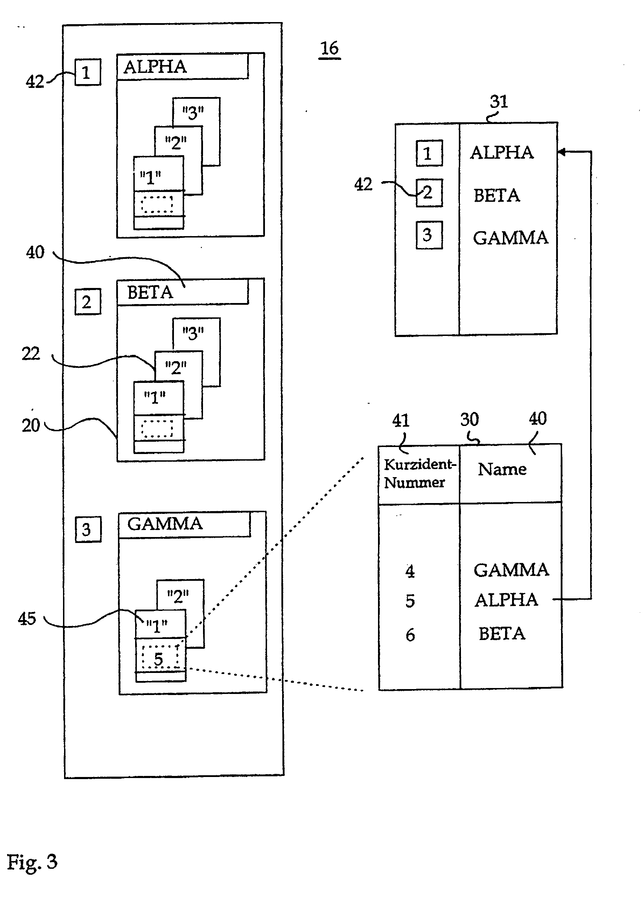

Zur Erhöhung der Abarbeitungsgeschwindigkeit und zur Verringerung des Speicherbedarfs besitzen erfindungsgemäß gebildete Pakete 20 ein besonders geeignetes Referenzierungssystem. Fig. 3 veranschaulicht seine Struktur. Ein Paket 20 wird jeweils von einer oder mehreren Klassendateien 22 gebildet. Jedes Paket 20 besitzt eine eindeutige textuelle Paketidentifikation 40, vorzugsweise in Form eines textuellen Namens, sowie eine, etwa durch eine dem ersten Paketbit zugeordnete Kennziffer beschreibbare, definierte physikalische Lage 42 innerhalb des Speichers 12. Zu jedem Paket wird weiterhin für die Abarbeitung durch die Interpretereinheit eine Kurzidentifikationsnummer 41 angelegt Die Anlage erfolgt laufzeitumgebungsabhängig während des Ladens des Paketes 20 in den Speicher 12. Die Zuordnung von Kurzidentifikationsnummern 41 zu Paketidentifikationen 40 ist in einer Tabelle 30 festgehalten, welche in jede Klassendatei 22 des Paketes 20 als Eintrag in den Biblikotheksabschnitt 25 aufgenommen wird. Beim Laden eines Paketes 20 vermerkt die Interpretereinheit 15 ferner in einer dafür reservierten Datenbank 31 die zu einer Paketidentifikation 40 gehörende tatsächliche physikalische Lage 42 des Paketes im Speicher. Bei der Abarbeitung eines Paketes verwendet die Interpretereinheit 15 dann die Kurzidentifikationsnummer 41 zur Referenzierung des Paketes 20, indem sie über die Tabelle 30 zunächst die Paketidentifikation ermittelt, anschließend über die Datenbank 31 auf das angegebene Paket 20 verzweigt.

Innerhalb eines Paketes 20 sind weiter Klassendateien 22 durch eine einfache, jeweils durchnummerierende Klassenidentifiktionsnummer 45 bezeichnet. Anhand jener referenziert die Interpretereinheit 15 eine Klassendatei 22 bei der Abarbeitung eines Paketes. Verweist somit z.B. ein Bytecode durch Nennung einer Kurz- sowie einer Klassenidentifikationsnummer auf eine Klassendatei 22 eines anderen Paketes 20, verzweigt die Interpretereinheit 15 zunächst in das Paket 20, dem die angegebene Kurzidentifikationsnummer zugeordnet ist, und sucht darin die Klassendatei mit der genannten Klassenidentifikationsnummer 45.

Das Konzept der Verwendung eines einfachen, auf einer Numerierung beruhenden Kennzeichnungssystems anstelle von textuellen Referenzierungen wird auch innerhalb der Klassendateien 22 angewendet. Darin sind auf gleiche Weise die Attribute sowie die angeführten Methoden durch Nummernnamen bezeichnet und Methodenidentifikationsnummern sowie Attributidentifikationsnummern angelegt. Die Namen umfassen vorzugsweise jeweils zwei Bytes. Davon bestimmt ein Teil, z.B. die ersten vier Bits die Zugriffsrechte, die übrigen Bits bilden eine Nummer. Anhand der vollständigen Nummernnamen werden Methoden und Attribute referenziert.

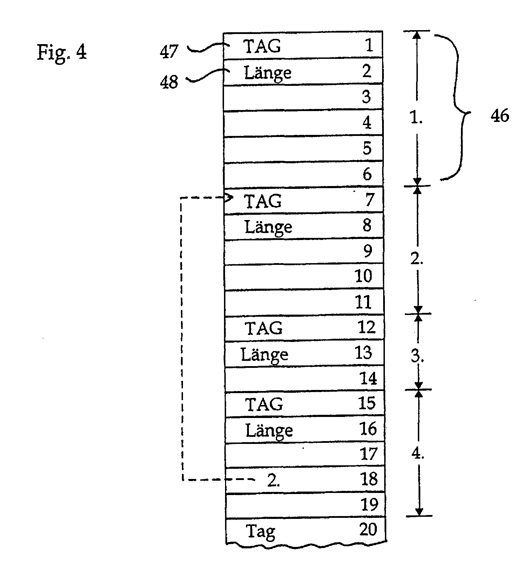

Durch eine besonders geeignete Struktur ist darüber hinaus eine vereinfachte Referenzierung der Einträge im Bibliotheksabschnitt 25 realisiert. Zur Verdeutlichung der neuartigen Strukturierung zeigt Fig. 4 zunächst die Struktur eines Bibliotheksabschnittes, wie sie einer üblichen, auf textueller Referenzierung beruhenden Klassendatei zugrundeliegt. Der Bibliotheksabschnitt wird durch eine Folge von Einträgen 46 gebildet, die der Übersichtlichkeit halber in Spaltenform untereinander dargestellt sind. Jeder Eintrag 46 umfaßt beginnend mit einem Identifizierungszeichen 47 eine seinem Inhalt entsprechende Anzahl von Bytes. Die Anzahl ist jedem Eintrag in Form eines Bytes 48 ebenfalls vorangestellt. Über die sich damit ergebende Folge von Bytezahlangaben ist die Lage jedes Eintrages innerhalb des Bibliotheksabschnittes definiert und lassen sich die Einträge 46 referenzieren. Zweckmäßig erstellt dabei die Interpretereinheit 15 eine Tabelle, welche zu jedem Eintrag die Lage seines führenden Bytes 47 angibt. So ist im vereinfachten Beispiel der Figur 4 etwa dem zweiten Eintrag die Byteposition 7, dem dritten Eintrag die Byteposition 12 zugeordnet. Erfolgt nun ein Verweis auf den zweiten Bibliothekseintrag, etwa aus dem vierten Bibliothekseintrag heraus, verzweigt die Interpretereinheit bei der Abarbeitung mit Hilfe der Tabelle auf das Byte an Position 7. Das Auffinden von Einträgen im Bibliotheksabschnitt auf diese Weise ist schon wegen der notwendigen Positionsermittlung zeitaufwendig.

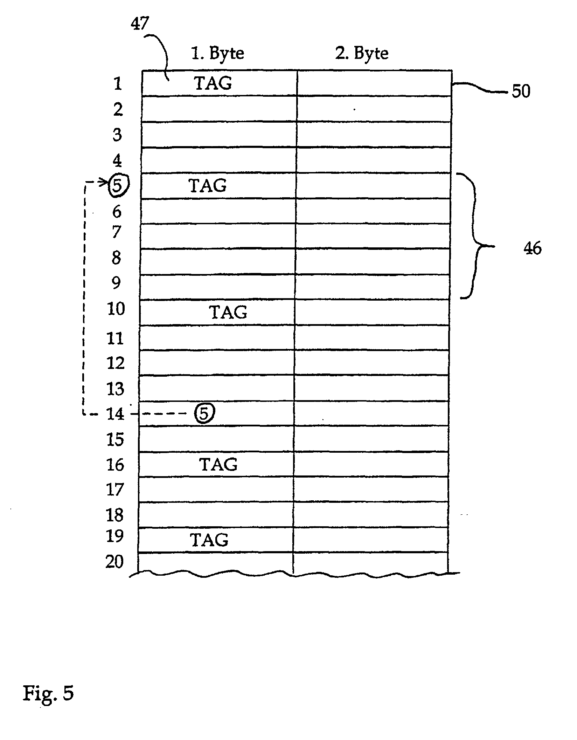

Fig. 5 zeigt einen Ausschnitt aus einem erfindungsgemäß strukturierten Bibliotheksabschnitt 25. Die den Bibliotheksabschnitt 25 bildende Bytefolge ist nun in zwei Byte lange Segmente 50 gegliedert. An dieser Segmentbreite werden alle Einträge 46 in dem Bibliotheksabschnitt 25 ausgerichtet. Zur Verdeutlichung der Segmentierung sind die Bibliothekseinträge in Form einer zweigeteilten Spalte wiedergegeben. Die Segmente 50 sind systematisch gekennzeichnet. In einfacher Weise werden sie etwa, wie in Fig. 4 angedeutet, durchnumeriert. Über diese Kennzeichnungssystematik erfolgen dann alle Referenzen auf Einträge in den Bibliotheksabschnitt 25. Beispielsweise erfolgt eine Referenz auf den mit Segment 5 beginnenden Eintrag durch die Angabe der Zahl 5. Abgesehen von der abgewandelten Referenzierung besitzen die Bibliothekseinträge 46 üblicherweise denselben Informationsgehalt wie ihn Einträge in den "Constant Pool" einer JAVA "Class" Datei aufweisen.

Das im Bibliotheksabschnitt 25 verwendete Referenzierungsprinzip ist durchgehend auch in allen Teilen einer Klassendatei 22 außerhalb des Bibliotheksabschnittes eingeführt. D.h. alle Referenzen auf Einträge 46 in den Bibliotheksabschnitt 25 sind durch Segmentpositionen ersetzt.

Zur weiteren Erhöhung der Abarbeitungsgeschwindigkeit können einer Klassendatei desweiteren Interpretationsinformationen zugefügt sein, welche die Ergebnisse von sonst durch die Interpretereinheit bei der Abarbeitung einer Klasse vorzunehmenden Such- und Verzweigungsschritten beinhalten. Sinnvoll ist die Anlage einer Tabelle, welche zu einer in einer Klassendatei referenzierten Methode jeweils angibt, wo die Methode gegebenenfalls überschrieben wurde. Bei Interpretation einer erfaßten Methode muß die Interpretereinheit dann nicht zunächst alle Sub- und Oberklassen auf eventuelle Überschreibungen prüfen. Zweckmäßig ist weiter die Anlage einer Liste mit den in einer Klasse verwendeten statischen Variablen. Desweiteren sinnvoll ist die Ausbildung einer Tabelle, worin die Struktur der in einem Paket verwendeten Objekte festgehalten wird. Besteht eine solche Tabelle, kann die Interpretereinheit erfaßte Objekte im Speicher durch einfache Auswertung der Tabelle schnell physikalisch richtig lokalisieren. Die vorgeschlagenen Interpretationsinformationen bilden in der Klassendatei einen eigenen Abschnitt, der vor oder an Stelle des in der Regel nicht eingerichteten Attributeabschnittes 29 tritt. Die Einrichtung von Interpretationsinformationen und damit die Belegung des dafür vorgesehenen Abschnittes ist optional.

Tabelle 1 zeigt in Darstellung in einer der Programmiersprache "C" entlehnten Metasprache die Gesamtstruktur einer sich bei Realisierung der vorstehend beschriebenen Maßnahmen ergebenden Klassendatei 22.

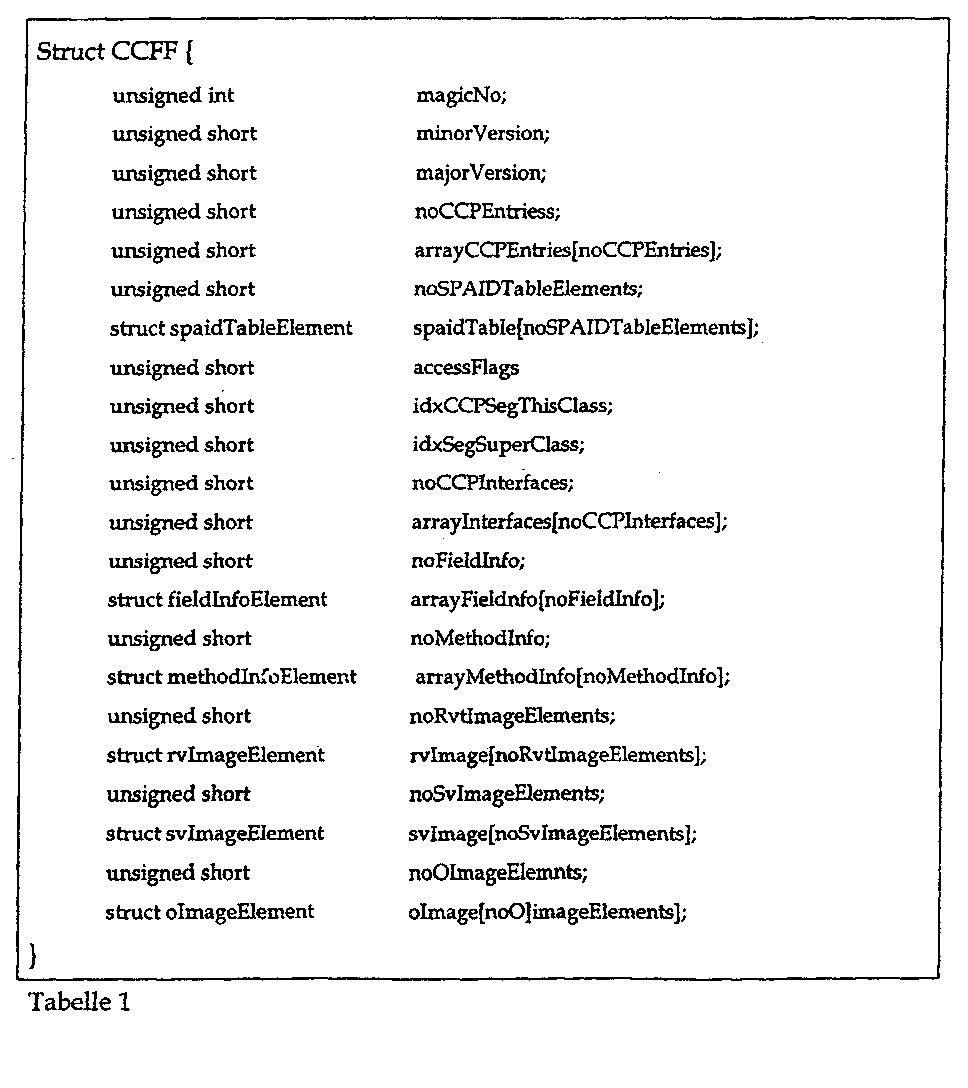

Die Bedeutung der angeführten Dateielemente ist in der nachfolgenden Tabelle 2 wiedergegeben.

**Tabelle 2a**

| | |
|---|---|
| magicNo Größe: Verwendung: | 4 Byte Identifizierende Kennung einer Klassendatei |
| | |
| minorVersion Größe: Verwendung: | 2 Byte entsprechend JVM Spezifikation |
| | |
| majorVersion Größe: Verwendung: | 2 Byte entsprechend JVM Spezifikation |
| | |
| noCCPEntries Größe: Verwendung: | 2 Byte Anzahl der im Bibliotheksabschnitt 28 enthaltenen Segmente |
| | |
| arrayCCPEntries Größe: Verwendung: | Anzahl der Segmente des Eintrags noCCPEntries mal Segmentgröße Bibliotheksabschnitt 28 |
| | |
| noSPAIDTableElements Größe: Verwendung: | 2 Byte Anzahl der Elemente in der Kurzidentifikations nummerntabelle, entspricht der Anzahl der verwendeten Kurzidentifikationsnum mern bzw. Paketidentifikationen innerhalb einer Klassendatei |
| | |
| spaidTable Größe: Verwendung: | Anzahl der Einträge in noSPAIDTableElements mal Größe der Einze leinträge (16 Byte) Zuordnung der Kurzidentifikationsnummer zu einer Paketidentifi kationsnummer |
| | |
| accessFlags Größe: Verwendung: | 2 Byte entsprechend JVM Spezifikation |
| | |
| idxCCPSegThisClass Größe: Verwendung: | 2 Byte Segment Index auf Klasseneintrag im Bibliotheksabschnitt 28, ent sprechend JVM-Spezifikation (this_class) |
| | |
| idxCCPSegSuperClass Größe: Verwendung: | 2 Byte Segment Index auf einen Klasseneintrag im Bibliotheksabschnitt 28, analog zu JVM-Spezifikation (super_class) |
| | |
| noCCPInterfaces Größe: Verwendung: | 2 Byte Anzahl der verwendeten Interfaceklassen im Bibliotheksabschnitt 28. Interfaces entsprechen der JVM-Spezifikation |

**Tabelle 2b**

| | |
|---|---|
| arrayCCPInterfaces Größe: Verwendung: | 2 Byte mal Anzahl der Interfaces im Bibliotheksabschnitt 28 Segmentindex auf Klassenarray, der das Interface im Bibliotheksabschnitt bezeichnet, entsprechend JVM-Spezifikation (interfaces[ ]) |
| | |
| noFieldInfo Größe: Verwendung: | 2 Byte Anzahl der FieldInfoElement Einträge, entsprechend JVM-Spezifikation (field-info) |
| | |
| arrayFieldInfo Größe: Verwendung: | 6 Byte mal Anzahl der FieldInfoElementeinträge Bibliotheksabschnitt 27 |
| | |
| noMethodInfo Größe: Verwendung: | 2 Byte Anzahl der im Bibliotheksabschnitt 28 enthaltenen methodinfoEle ment Einträge |
| | |
| arrayMethodInfo Größe: Verwendung: | n Byte mal Anzahl der im Bibliotheksabschnitt 28 enthaltenen MethodInfoElement Einträge Feld mit methodInfoElement |
| | |
| rvImage Größe: Verwendung: | 4 Byte mal Anzahl der Elemente Optional.Enthält in Kurzform abstrahierte Informationen über alle virtuellen Informationen, um den Aufbau notwendiger Link- und Laufzeitumgebungs strukturen zu vereinfachen. |
| | |
| noRvImageElements Größe: Verwendung: | 2 Byte Anzahl der Einträge in rvImage, falls 0 kein rvImage. |
| | |
| noSvImageElements Größe: Verwendung: | 2 Byte Anzahl der Einträge in svImage; falls 0 kein svImage. |
| | |
| svImage Größe: Verwendung: | 4 Byte mal Anzahl der Einträge Optional. Enthält in Kurzform abstrahierte Informationen über alle virtuellen Informationen, um den Aufbau notwendiger Link- und Laufzeitumgebungsstrukturen zu vereinfachen. |
| | |
| noOImage Größe: Verwendung: | 2 Byte Anzahl der Einträge in olmage; falls 0 kein oImage. |
| | |
| oImage Größe: Verwendung: | 2 Byte mal Anzahl der Einträge Optionales Objektabbild. Enthält in Kurzform abstrahierte In formationen über alle virtuellen Informationen, um Aufbau von Link- und Laufzeitumgebungs strukturen zu vereinfachen. |

Die sich anschließenden Tabellen 3 bis 8 zeigen, in Darstellung in einer der Programmiersprache "C" entlehnten Metasprache, die Strukturdefinitionen möglicher Einträge in einen Bibliotheksabschnitt 28, dazu jeweils Größe, Verwendung und Bedeutung der in den Tabellen angeführten Elemente.

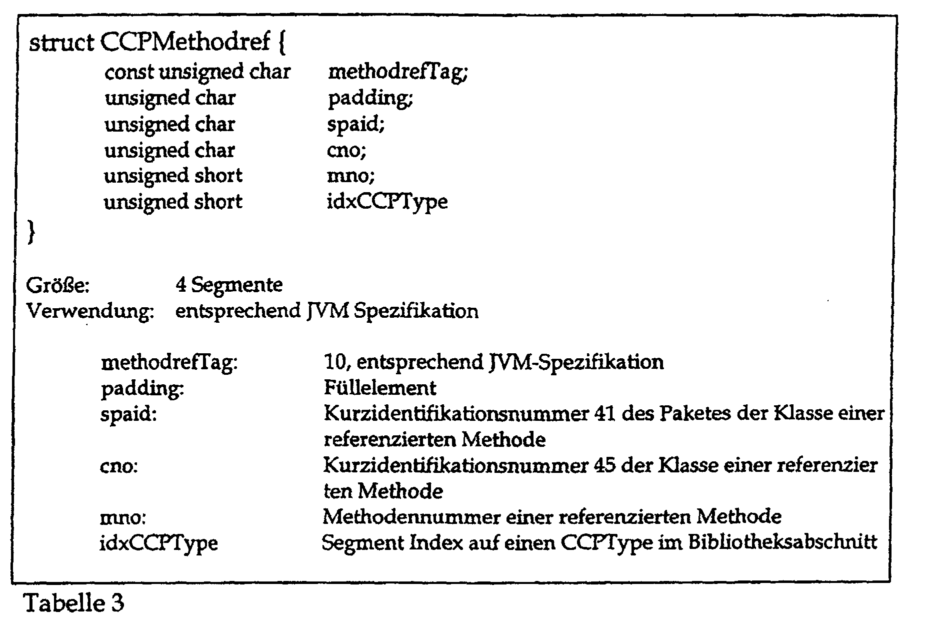

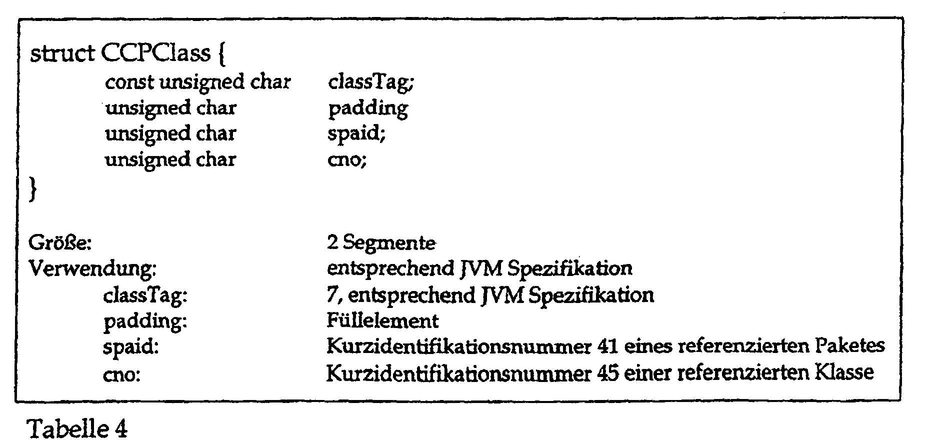

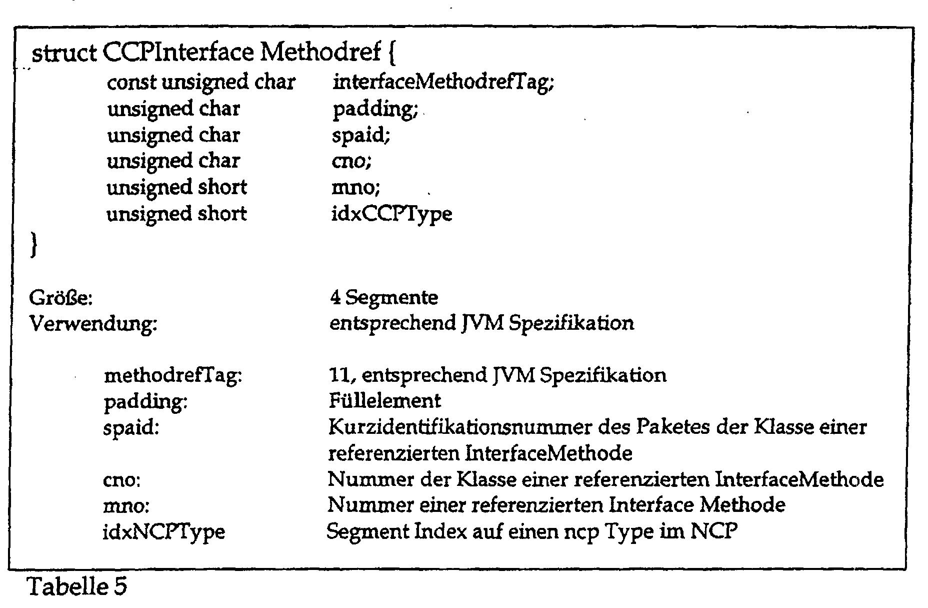

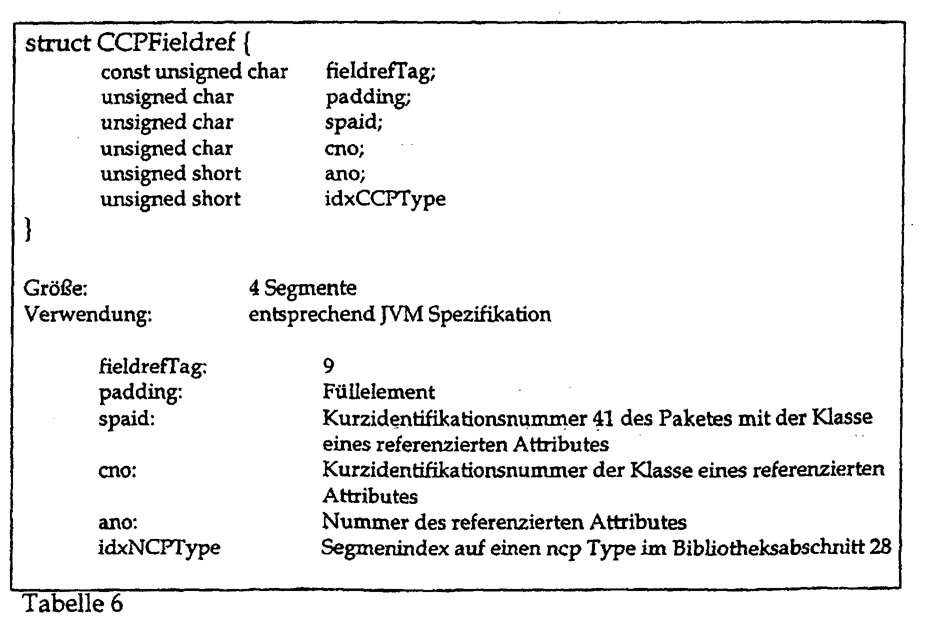

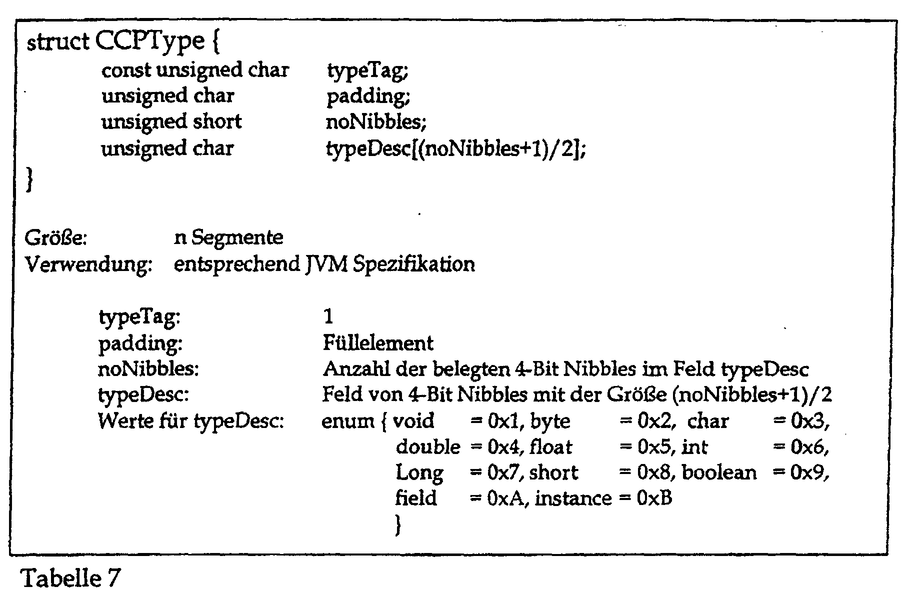

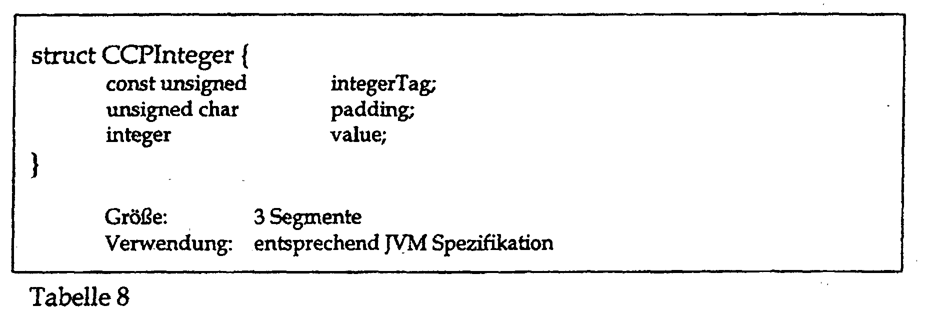

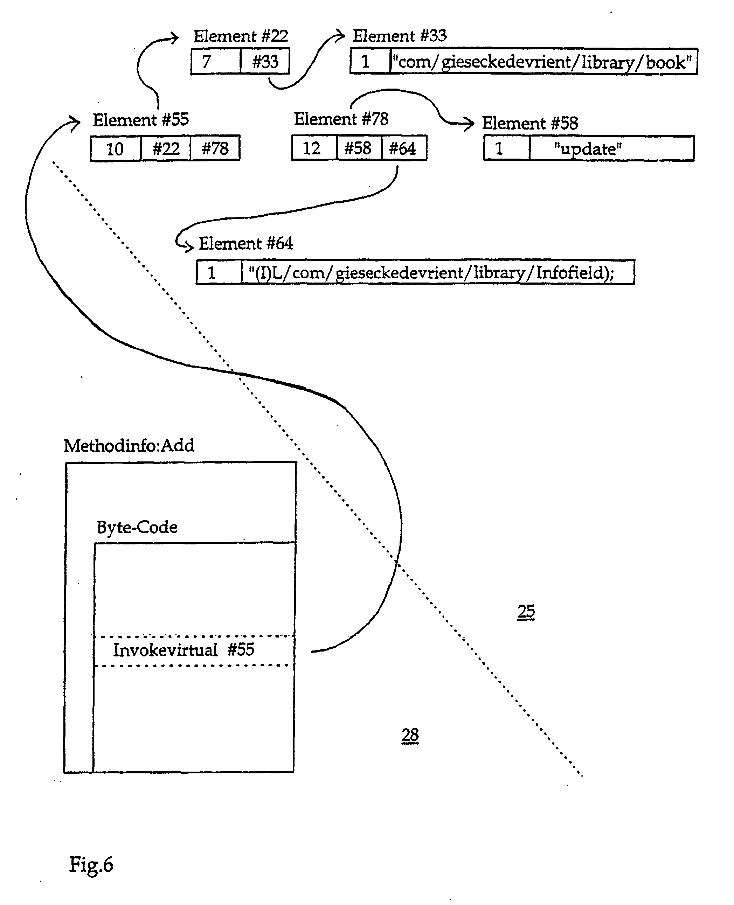

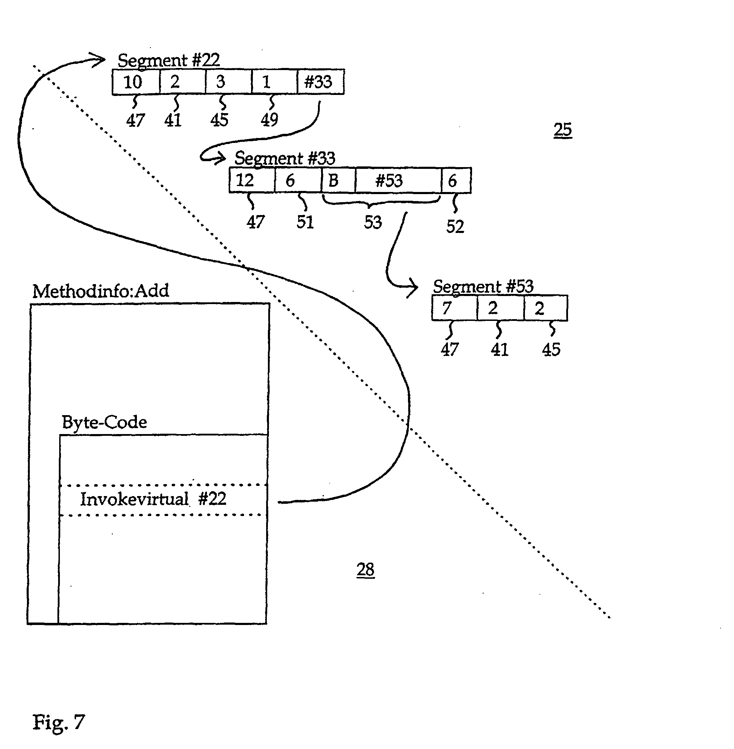

Die sich durch das vorgeschlagene Referenzierungssystem ergebende vereinfachte Abarbeitbarkeit eines Paketes durch eine Interpretereinheit 15 ist in den Figuren 6 und 7 an einem Beispiel veranschaulicht. Zugrundegelegt ist dem Beispiel die in Tabelle 9 wiedergegebene, in JAVA abgefaßte Quellprogrammsequenz, welche eine Addition beschreibt und entsprechend eine Methode "Add" beinhaltet.

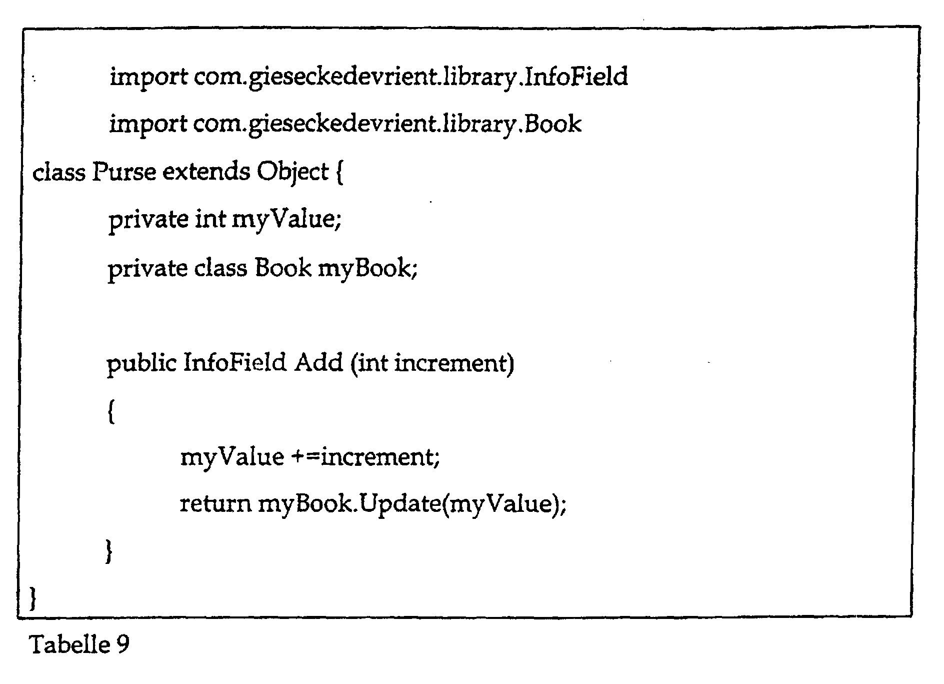

Bei üblicher, in Figur 6 dargestellter Abarbeitung der resultierenden Klassendatei verzweigt die Interpretereinheit 15 in den Methodenabschnitt 28 der Klassendatei "Purse" zu dem Eintrag der Methode "Add". Der dazugehörende Byte-Code beinhaltet die Anweisung "invokevirtual" mit der Angabe eines Elementes des Bibliotheksabschnittes 25, nämlich des Elementes #55. Zu diesem verzweigt die Interpretereinheit 15 entsprechend. Element#55 beinhaltet seinerseits zwei Verzweigungsangaben, welche auf die weiteren Elemente #22 bzw. #78 des Bibliotheksabschnittes 25 verweisen. Element #22 verweist wiederum auf Element #33, das schließlich in textueller Form Informationen zu der in der Quellprogrammsequenz genannten Klasse "Book" enthält. Dabei bezeichnen die ersten Textblöcke ein Paket, das letzte - "Book" - die Klasse. Das zweite durch Element #55 angewiesene Element #78 enthält wiederum zwei Weiterverweisungen, eine auf Element #58, eine auf Element #64. Das erste beinhaltet in textueller Form die auszuführende Methode "update". Element #64 beinhaltet, ebenfalls in textueller Form, Informationen zum Rückgabeparameter, hier vom Typ "InfoField", sowie die Angabe des Typs des Übergabeparameters. Die ersten Textblöcke bezeichnen dabei wieder ein Paket, der in Klammem gesetzte Buchstabe "I" bezeichnet den Typ des Übergabeparameters, hier Integer. Die nachfolgenden Textblöcke bezeichnene den Rückgabetyp als Instanz der im Paket "com/gieseckedevrient/Iibrary" definierten Klasse "Infofield".

Die Ausführung derselben Quellprogrammsequenz ausgehend von einer Klassendatei mit einer erfindungsgemäßen, vorhergehend beschriebenen Struktur ist in Figur 7 veranschaulicht. Wieder verzweigt die Interpretereinheit zunächst in den Methodenabschnitt 28 zu der Anweisung "invokevirtual". Diese verweist nun auf das Segment #22 im Bibliotheksabschnitt 25. Darin finden sich eine Tag-Nummer 47, welche eine Methode anzeigt, eine Kurzidentifikationsnummer 41 des zu der gewünschten Methode gehörigen Paketes, die Klassennummer 45, in der Methode abgelegt ist, sowie die Methodennummer 49. Desweiteren verweist Segment #22 auf das Segment #33. Das enthält wiederum eine Tag-Nummer 47, welche die Beschreibung eines Parametertyps anzeigt, eine Information 51 über eine Zahl von Nibbles, welche sich zur Beschreibung des Rückgabeparametertyps anschließen gefolgt von der entsprechenden Anzahl Nibbles zur Beschreibung des RückgabeParameters, sowie die Angabe 52 des Typs des ÜbwgabeParameters. Die Beschreibung des Rückgabeparameters 53 beinhaltet dabei einen Verweis auf das Segment #53 des Bibliotheksabschnittes 25. Segment #53 wiederum umfaßt neben einer Tag-Nummer 47, welche eine Klasse anzeigt, eine Kurzidentifikationsnummer 41 eines Paketes sowie die den Typ des Rückgabeparameters identifizierende Klassennummer 45. Mit diesen Anweisungen ist die Programmsequenz vollständig beschrieben. Somit ersetzen im Beispiel drei Verzweigungen sechs bei Verwendung textueller Referenzierungen. Entsprechend der geringeren Anzahl von Einzelanweisungen aufgrund der Verwendung des auf Nummern basierenden Referenzierungssystems reduziert sich der Speicherplatzbedarf für die zugrundeliegenden Klassendateien.

Das beschriebene Konzept bietet bezüglich seiner Einzelmaßnahmen einen breiten Gestaltungspielraum. So hat sich die vorgeschlagene Strukturierung des Bibliotheksabschnittes in zwei Byte breite Segmente in der Praxis als vorteilhaft erwiesen, weil auf diese Weise eine optimale Nutzung des Speicherplatzes möglich ist. Grundsätzlich möglich ist aber auch jede andere Segmentbreite. Insbesondere kann es gegebenenfalls zweckmäßig sein, nur einen Teil der Einzelmaßnahmen zu realisieren, beispielsweise den Bibliotheksabschnitt zu segmentieren, Kurzidentifikationsnummern aber nicht einzuführen.

## Patentansprüche

1. Datenträger mit einer Prozessoreinrichtung (10), einer Kommunikationseinrichtung (11) zum Austausch von Daten mit einer externen Einheit, sowie einer Speichereinrichtung (12), worin wenigstens ein Applikationsprogramm sowie eine Interpretereinheit (15) zur referenzorientierten Abarbeitung des Applikationsprogrammes enthalten sind, wobei das Applikationsprogramm in Klassendateien (22) gegliedert ist, welche jeweils einen Bibliotheksabschnitt (25) aufweisen, dessen Einträge (46) bei der Abarbeitung des die Klassendatei (22) bildenden Codes benötigte unveränderliche Elemente des Interaktionskontextes enthalten,
wobei der Bibliotheksabschnitt (25) in eine Folge gleich langer, jeweils eine vorbestimmte Anzahl von Bytes umfassende Segmente (50) gegliedert ist,
wobei jeder Eintrag (46) in den Bibliotheksabschnitt (25) eine vorgegebene Zahl von Segmenten (50) umfaßt, und
wobei die Position des ersten Segmentes jedes Eintrages (46) innerhalb der Bytefolge als Referenz für den Eintrag (46) dient.

2. Datenträger nach Anspruch 1, wobei die Klassendateien (22) eines Applikationsprogrammes zu Paketen (20) zusammengefaßt sind.

3. Datenträger nach Anspruch 2, wobei den Paketen (20) Kurzidentifikationsnummern (41) zugeordnet sind, welche zur Referenzierung eines Paketes (20) dienen.

4. Datenträger nach Anspruch 1, wobei die Klassendateien (22) durch eine Nummer (45) bezeichnet sind, und die Interpretereinheit (15) bei der Abarbeitung eines Applikationsprogrammes die Nummer (45) zum Auffinden der Klassendatei (22) nutzt.

5. Datenträger nach Anspruch 1, wobei die in einem Applikationsprogramm enthaltenen Methoden durch eine Nummer bezeichnet sind, und die Nummern zum Auffinden der Methode innerhalb des Applikationsprogrammes dienen.

6. Datenträger nach Anspruch 1, wobei die in einem Applikationsprogramm enthaltenen Attribute numeriert sind, und die Nummern zum Auffinden der Attribute dienen.

7. Datenträger nach Anspruch 3, wobei der Bibliotheksabschnitt (25) jeder Klasse eines Paketes (20) eine Tabelle (30) enthält, worin alle in dem Paket (20) vergebenen Kurzidentifikationsnummern (41) eingetragen sind.

8. Datenträger nach Anspruch 1, wobei eine Klassendatei (22) einen Abschnitt aufweist, worin Informationen abgelegt sind, welche das Ergebnis einer sonst von der Interpretereinheit (15) bei der Interpretation einer Anweisung vorzunehmenden Suche und /oder Verzweigung enthalten.

9. Datenträger mit einer Prozessoreinrichtung (10), einer Kommunikationseinrichtung (11) zum Austausch von Daten mit einer externen Einheit, sowie einer Speichereinrichtung (12), worin wenigstens ein Applikationsprogramm sowie eine Interpretereinheit (15) zur referenzorientierten Abarbeitung des Applikationsprogrammes enthalten sind, wobei das Applikationsprogramm in Klassendateien (22) gegliedert ist, welche jeweils einen Bibliotheksabschnitt (25) aufweisen, dessen Einträge (46) bei der Abarbeitung des die Klassendatei (22) bildenden Codes benötigte unveränderliche Elemente des Interaktionskontextes enthalten,
wobei die Klassendateien (22) eines Applikationsprogrammes zu Paketen (20) zusammengefaßt und den Paketen (20) Kurzidentifikationsnummern (41) zugeordnet sind, welche zur Referenzierung eines Paketes (20) dienen.

## Claims

1. A data carrier having a processor device (10), a communication device (11) for exchanging data with an external unit, and a memory device (12) containing at least one application program and an interpreter unit (15) for reference-oriented execution of the application program, wherein the application program is structured in class files (22) each having a library section (25) whose entries (46) contain invariable elements of the interaction context required during execution of the code forming the class file (22),
wherein the library section (25) is structured in a sequence of equally long segments (50) each comprising a predetermined number of bytes,
wherein each entry (46) in the library section (25) comprises a given number of segments (50), and
wherein the position of the first segment of each entry (46) within the byte sequence serves as a reference for the entry (46).

2. A data carrier according to claim 1, wherein the class files (22) of an application program are combined into packets (20).

3. A data carrier according to claim 2, wherein the packets (20) have associated therewith short identification numbers (41) serving to reference a packet (20).

4. A data carrier according to claim 1, wherein the class files (22) are designated by a number (45), and the interpreter unit (15) utilizes the number (45) for finding the class file (22) during execution of an application program.

5. A data carrier according to claim 1, wherein the methods contained in an application program are designated by a number, and the numbers are used for finding the method within the application program.

6. A data carrier according to claim 1, wherein the attributes contained in an application program are numbered, and the numbers are used for finding the attributes.

7. A data carrier according to claim 3, wherein the library section (25) of each class of a packet (20) contains a table (30) in which all short identification numbers (41) allocated in the packet (20) are entered.

8. A data carrier according to claim 1, wherein a class file (22) has a section holding information containing the result of a search and/or branching otherwise to be performed by the interpreter unit (15) during interpretation of a statement.

9. A data carrier having a processor device (10), a communication device (11) for exchanging data with an external unit, and a memory device (12) containing at least one application program and an interpreter unit (15) for reference-oriented execution of the application program, wherein the application program is structured in class files (22) each having a library section (25) whose entries (46) contain invariable elements of the interaction context required during execution of the code forming the class file (22),
wherein the class files (22) of an application program are combined into packets (20) and the packets (20) have associated therewith short identification numbers (41) serving to reference a packet (20).

## Revendications

1. Support de données avec un processeur (10), un dispositif de communication (11) pour l'échange de données avec une unité extérieure, ainsi qu'un dispositif de mémoire (12), dans lequel sont compris au moins un programme d'application ainsi qu'une unité d'interprétation (15) pour l'exécution du programme d'application par rapport aux références, moyennant quoi le programme d'application est divisé en fichiers classe (22) qui présentent chacun une section bibliothèque (25) dont les entrées (46), lors de l'exécution du code qui forme le fichier classe (22), comprennent des éléments invariables nécessaires du contexte d'interaction,
moyennant quoi la section bibliothèque (25) est divisée en une série de segments de taille égale (50) comprenant chacun un nombre prédéfini d'octets,
moyennant quoi chaque entrée (46) dans la section bibliothèque (25) contient un nombre prédéfini de segments (50) et
moyennant quoi la position du premier segment de chaque entrée (46) dans la suite d'octet sert de référence pour l'entrée (46).

2. Support de données selon la revendication 1, les fichiers classe (22) d'un programme d'application étant rassemblés en des paquetages (20).

3. Support de données selon la revendication 2, des numéros abrégés d'identification qui servent à l'indexation d'un paquetage étant attribués aux paquetages (20).

4. Support de données selon la revendication 1, les fichiers classe (22) étant désignés par un numéro (45) et l'unité d'interprétation (15) utilisant le numéro (45) lors de l'exécution d'un programme d'application pour retrouver le fichier classe (22).

5. Support de données selon la revendication 1, les méthodes contenues dans un programme d'application étant désignées par un numéro, et les numéros servant à retrouver la méthode au sein du programme d'application.

6. Support de données selon la revendication 1, les attributs contenus dans un programme d'application étant numérotés, et les numéros servant à retrouver les attributs.

7. Support de données selon la revendication 3, la section bibliothèque (25) de chaque classe d'un paquetage (20) comprenant un tableau (30) où tous les numéros abrégés d'identification (41) attribués dans le paquetage (20) sont inscrits.

8. Support de données selon la revendication 1, un fichier classe (22) présentant une section où sont stockées les informations qui contiennent le résultat d'une recherche ou branchement à effectuer normalement par l'unité d'interprétation (15) lors de l'interprétation d'une instruction.

9. Support de données avec un processeur (10), un dispositif de communication (11) pour l'échange de données avec une unité extérieure, ainsi qu'un dispositif de mémoire (12), dans lequel sont compris au moins un programme d'application ainsi qu'une unité d'interprétation (15) pour l'exécution du programme d'exécution par rapport aux références, le programme d'application étant divisé en fichiers classe (22) qui présentent chacun une section bibliothèque (25) dont les entrées (46), lors de l'exécution du code qui forme le fichier classe (22), comprennent des éléments invariables nécessaires du contexte d'interaction,
moyennant quoi les fichiers classe (22) d'un programme d'application sont rassemblés en paquetages (20) et des numéros abrégés d'identification (41) sont attribués aux paquetages (20) qui servent à l'indexation d'un paquetage (20).
